# EUROPÄISCHE PATENTSCHRIFT

(11) **EP 1 526 979 B1**
(45) Veröffentlichungstag und Bekanntmachung des Hinweises auf die Patenterteilung: **16.03.2011**
(21) Anmeldenummer: 03766059.4
(22) Anmeldetag: 25.07.2003
(51) Int. Cl.: B60L 7/28, H02P 15/00

(54) **STEUER- BZW. REGELELEKTRONIK INBESONDERE FÜR EINE WIRBELSTROMBREMSE**
CONTROL OR ADJUSTMENT ELECTRONICS SYSTEM ESPECIALLY FOR AN EDDY CURRENT BRAKE
DISPOSITIF ELECTRONIQUE DE COMMANDE ET DE REGLAGE

(30) Priorität: 01.08.2002 AT 11712002
(43) Veröffentlichungstag der Anmeldung: 04.05.2005
(73) Patentinhaber: Contec Steuerungstechnik & Automation Gesellschaft m.b.H., 6341 Ebbs (AT)
(72) Erfinder: LÖCKER, Jury, A-6336 Langkampfen (AT)
(74) Vertreter: Torggler, Paul Norbert
(86) Internationale Anmeldenummer: PCT/AT2003/000212
(87) Internationale Veröffentlichungsnummer: WO 2004/012957

(56) Entgegenhaltungen:
- EP-A- 0 466 941
- DE-A- 4 113 258
- DE-U- 29 713 136
- US-A- 5 332 954
- US-A- 5 482 146
- US-A- 5 637 990
- PATENT ABSTRACTS OF JAPAN vol. 010, no. 342 (M-536), 19. November 1986 (1986-11-19) & JP 61 142904 A (TOSHIBA CORP), 30. Juni 1986 (1986-06-30)

## Beschreibung

Die vorliegende Erfindung betrifft eine Steuer- bzw. Regelelektronik, insbesondere für eine Wirbelstrombremse eines Fahrzeugs, mit einer Steuer- bzw. Regeleinrichtung zur Steuerung bzw. Regelung der zu schaltenden Vorrichtung, vorzugsweise der Erregerspulen einer Wirbelstrombremse, und mit einem ersten durch die Steuer- bzw. Regeleinrichtung schaltbaren Schaltelement, das in Serie mit der zu schaltenden Vorrichtung, insbesondere mit den Erregerspulen einer Wirbelstrombremse geschalten ist.

Wirbelstrombremsen in Fahrzeugen dienen hauptsächlich der Entlastung des eigentlichen Hauptbremssystems des Fahrzeugs und stellen somit Zusatzbremseinrichtungen dar. Sicherheitstechnisch gesehen ist der Aus-Zustand der sichere Betriebszustand einer derartigen Zusatzbremseinrichtung, da mit der Hauptbremseinrichtung bereits ein funktionierendes Bremssystem zur Verfügung steht. Problematisch ist bei derartigen Vorrichtungen, dass die Fehlfunktion eines Schaltelementes die Deaktivierung der Vorrichtung und damit den Übergang in den sicheren Betriebszustand verhindern kann. Bei Wirbelstrombremsen ist beispielsweise aus verschiedenen Gründen der Einsatz von Halbleiter-Schaltelementen, beispielsweise MOSFETS, wünschenswert. Bei diesen Schaltelementen kann es zum sogenannten Durchlegieren des Transistors kommen, wonach dieser nicht mehr stromundurchlässig geschalten werden kann. Ist ein durchlegierter Transistor in Serie mit einer zu schaltenden Vorrichtung und einer Spannungsquelle geschalten, kann der über den Transistor geschlossene Stromkreis und damit der Betrieb der Vorrichtung nicht mehr unterbrochen werden.

Aufgabe der Erfindung ist es, bei gattungsgemäßen Einrichtungen gemäß des Oberbegriffs des Patentanspruchs 1 eine Erhöhung der Betriebssicherheit zu erreichen.

Dies wird erfindungsgemäß durch eine Steuer- bzw. Regelelektronik mit den Merkmalen des Anspruchs 1 erreicht.

### Weiter auf Seite 2 der ursprünglich eingereichten Beschreibung

Die technischen Vorteile einer derartigen Schaltung sind leicht zu verstehen. Im Normalbetrieb erfolgt das Ein- und Ausschalten der zu schaltenden Vorrichtung über das mit der Vorrichtung in Serie geschaltene erste Schaltelement. Das Leitendschalten dieses Schaltelementes stellt eine leitende Verbindung zwischen Bereichen unterschiedlichen elektrischen Potentials, beispielsweise den Polen einer Batterie, her. Dadurch kann ein elektrischer Strom durch das erste Schaltelement und der in Serie mit diesem Schaltelement geschaltenen Vorrichtung fließen. Kann der Stromkreis aufgrund eines Defektes des ersten Schaltelementes nicht mehr unterbrochen werden, wird durch eine geeignete Steuer- bzw. Regeleinrichtung das zweite parallel zu der zu schaltenden Vorrichtung geschaltene Schaltelement leitfähig geschalten. Dadurch wird dem elektrischen Strom eine Strecke mit wesentlich geringerem elektrischen Widerstand, nämlich über die beiden Schaltelemente statt über die zu schaltende Vorrichtung und das eine Schaltelement geboten. Bei unveränderter angelegter Spannung kommt es daher zu einem Kurzschluss-Strom, der wesentlich größer ist als der im Normalbetrieb durch den Schaltkreis fließende Strom. Da jedes Schaltelement nur bis zu einem gewissen oberen Grenzwert des durchfließenden Stromes betrieben werden kann, kommt es zum Durchbrennen des ersten in Serie mit der zu schaltenden Vorrichtung geschaltenen Schaltelementes und damit zur Unterbrechung des Stromkreises. Da dieses erste Schaltelement auch im Normalbetrieb einer ständigen Belastung ausgesetzt und damit weniger robust als das zweite im Normalbetrieb nicht eingesetzte Schaltelement ist, kommt es zum gewünschten Durchbrennen dieses ersten Schaltelementes. Es ist also möglich, beide Schaltelemente baugleich auszuführen und trotzdem mit großer Sicherheit davon ausgehen zu können, dass es zu einem Durchbrennen des ersten Schaltelementes kommt.

Eine vorteilhafte Ausführungsform der Erfindung ergibt sich dadurch, dass mit wenigstens einem, vorzugsweise jedem der parallel zu der zu schaltenden Vorrichtung, vorzugsweise mit den Erregerspulen einer Wirbelstrombremse geschaltenen Schaltelemente jeweils ein elektrischer Widerstand in Serie geschalten ist, wobei jeder der elektrischen Widerstände parallel zu der zu schaltenden Vorrichtung, vorzugsweise den Erregerspulen einer Wirbelstrombremse, geschalten ist. Diese Widerstände begrenzen den durch ein einzelnes Schaltelement durchfließenden Strom und damit die Belastung dieses Schaltelementes, während das in Serie mit all diesen Schaltelementen geschaltene erste Schaltelement dem Gesamtstrom der sich als Summe der durch die einzelnen Schaltelemente durchfließenden Teilströme ergibt, ausgesetzt ist. Damit wird die Wahrscheinlichkeit, dass es zu einem Durchbrennen des ersten Schaltelementes kommt, nochmals erhöht. Darüber hinaus ist es sehr unwahrscheinlich, das bei einer Mehrzahl von parallel geschaltenen zweiten Schaltelemente all diese Schaltelemente durchbrennen, bevor es zu einem Durchbrennen des ersten in Serie geschaltenen Schaltelementes kommt. Diese elektrischen Widerstände müssen allerdings nicht als gesonderte Bauteile in der Elektronik vorliegen, da jedes Schaltelement bereits einen gewissen Innenwiderstand aufweist.

Bei der Ausführung als extern vorliegende Widerstände bietet es sich an, all diese Widerstände gleichohmig auszuführen.

Eine weitere vorteilhafte Ausführungsform der Erfindung ergibt sich dadurch, dass wenigstens ein Schaltelement ein Halbleiterbauelement als Schalter, vorzugsweise einen MOSFET umfasst. Derartige Schaltelemente sind zu geringen Kosten kommerziell erhältlich und mit geringen Betriebsspannungen schaltbar.

Eine weitere vorteilhafte Ausführungsform der Erfindung ergibt sich dadurch, dass der Steuer- bzw. Regeleinrichtung ein für den Betriebszustand wenigstens eines Schaltelementes charakteristisches Signal zuführbar ist. Dadurch kann zu jedem Zeitpunkt der momentane Zustand der einzelnen Schaltelemente beurteilt werden. Beispielsweise kann über den entlang eines mit der zu schaltenden Vorrichtung in Serie geschaltenen Schaltelementes auftretenden Spannungsabfall bei bekanntem Widerstand auf die Stärke des die zu schaltende Vorrichtung durchfließenden Stromes rückgeschlossen werden. Es bietet sich auch an, einen Temperatursensor zur Überwachung der Betriebstemperatur der zu schaltenden Vorrichtung, dessen Signal wenigstens der Steuer- bzw. Regeleinrichtung zuführbar ist, vorzusehen. Wird eine bestimmte, vorher festgelegte Maximaltemperatur überschritten, kann die Ausgabe einer Temperaturwarnung sowie gegebenenfalls die Abschaltung der zu schaltenden Vorrichtung vorgesehen sein. Analog kann ein Spannungssensor die elektrische Betriebsspannung der zu schaltenden Vorrichtung und/oder der Steuer- bzw. Regelelektronik überwachen und gegebenenfalls einen Alarm abgeben bzw. die Bremsleistung reduzieren (Stromaufnahme).

Eine weitere vorteilhafte Ausführungsform der Erfindung ergibt sich dadurch, dass die zu schaltende Vorrichtung Erregerspulen einer Wirbelstrombremse aufweist, die zur Regelung der Bremsleistung als Gesamtheit mit einer pulsweitenmodulierten (PWM) Gleichspannung durch das in Serie mit den Erregerspulen geschaltete Schaltelement schaltbar sind. Das Betreiben derartiger Vorrichtungen durch das Anlegen einer pulsweiten- modulierten Gleichspannung an das in Serie mit den Erregerspulen geschaltete Schaltelement ist an sich bereits bekannt und wird daher hier nicht näher beschrieben. Zu erwähnen ist, dass diese Stromänderung zu störenden Spannungsschwankungen im Bordnetz des Fahrzeuges führt. Die Größe der Spannungsschwankung verhält sich linear zur Geschwindigkeit der Stromänderung und wird vor allem bei großen Schaltfrequenzen problematisch. Zur Minimierung dieser Bordnetzbeeinflussung werden in der erfindungsgemäßen Ausführungsform die Ein- bzw. Ausschaltflanken des pulsweiten- modulierten Signales abgeflacht, wodurch es zu einer Verkleinerung der Spannungsschwankungen kommt. Der Strom steigt also, beispielsweise über einen Zeitraum von etwa 100 Mikrosekunden von Null auf den gewünschten Maximalwert an und fällt nach einer bestimmten Zeit kontrolliert in ebenfalls 100 Mikrosekunden von diesem Maximalwert wieder auf Null ab. Dieses Schaltsignal kann dabei mit dem der Steuer- bzw. Regeleinrichtung zugeführten Stromsignal das tatsächlich durch den Stromkreis fließt, verglichen werden. Dies gestattet eine Nachregelung des angelegten Schaltsignales.

Bei einer weiteren vorteilhaften Ausführungsform der Erfindung ist vorgesehen, dass sie in einem Fahrzeug angeordnet ist und eine Schnittstelle zur bidirektionalen Datenübertragung mit anderen im Fahrzeug angeordneten Einrichtungen - vorzugsweise ABS, Tachometer, Bordcomputer oder dergleichen - aufweist. Dies gestattet das optimale Zusammenspiel mit anderen im Fahrzeug angeordneten elektronischen Einrichtungen, wodurch die Betriebssicherheit der Vorrichtung weiter erhöht wird. Beispielsweise kann bei einer Aktivierung des Antiblockiersystems des Fahrzeugs eine gleichzeitige Inbetriebnahme der Wirbelstrombremse verhindert werden. In Korrelation mit den Messwerten des Tachometers kann in an sich bekannter Weise eine Tempomatfunktion durch die Wirbelstrombremse realisiert werden. Weiters kann vorgesehen sein, die Leistung der Wirbelstrombremse über einen manuell bedienbaren mehrstufigen Schalthebel zu regeln.

Eine weitere Erhöhung der Betriebssicherheit ergibt sich dadurch, dass die Steuer- bzw. Regelelektronik aus zwei räumlich voneinander getrennten Modulen, beispielsweise einem elektronischen Kontrollmodul (Electronic Control Modul, ECM) und einem elektronischen Versorgungsmodul (Electronic Power Modul, EPM) besteht. Vorteilhafterweise stehen diese über eine Bidirektionale Schnittstelle zur Energie- und/oder Datenübertragung, beispielsweise einer Zwei-Drahtschnittstelle miteinander in Verbindung. Das ECM kann in der Nähe der übrigen Bordsysteme, beispielsweise im Führerhaus des Fahrzeugs angeordnet sein, während das EPM an der Wirbelstrombremse selbst angeordnet ist. Das ECM übernimmt die Kommunikation mit den übrigen Bordsystemen und wertet ABS, Tachosignal und die Stellung des Bedienhebels aus, um die benötigte Bremsleistung zu bestimmen. Das EPM setzt die Vorgaben des ECM um und steuert die Wirbelstrombremse pulsweitenmoduliert an. Über einen CAN (Controller Area Network) Busanschluss mit einer entsprechenden Protokollanbindung kann das ganze System über einen fahrzeuginternen CAN-Bus kontrolliert und gesteuert werden. Eine eigensichere Ausführung des EPM, bei der eine Unterbrechung oder ein Kurzschluss der Schnittstelle zum ECM automatisch zur Abschaltung des EPM führen, ist möglich.

Vorteilhafterweise geht die Steuerungselektronik bei Auftreten einer Funktionsstörung einer ihrer Komponenten und/oder der zu schaltenden Vorrichtung in einen Fehlerbetriebsmodus über. In diesem Modus wird das Vorhandensein der Funktionsstörung laufend überprüft, wodurch nach dem Verschwinden der Funktionsstörung ein Übergang in den Normalbetriebsmodus ermöglicht wird. Stellt die Steuer- bzw. Regelelektronik die Zerstörung eines der Schaltelemente fest, kommt es vorteilhafterweise zur Abschaltung der Vorrichtung, wobei die neuerliche Inbetriebnahme durch die Steuer- bzw. Regelelektronik verhindert wird.

Weitere Einzelheiten und Vorteile der Erfindung ergeben sich aus den Figuren 1 bis 4 und den dazugehörigen Beschreibungen. Dabei zeigen
Fig. 1 eine schematische Darstellung einer erfindungsgemäßen Steuer- bzw. Regelelektronik,
Fig. 2 ein weiteres Ausführungsbeispiel einer erfindungsgemäßen Steuer- bzw. Regelelektronik,
Fig. 3 ein weiteres Ausführungsbeispiel einer erfindungsgemäßen Steuer- bzw. Regelelektronik mit Darstellung des Informationsflusses zwischen den einzelnen Bauteilen und
Fig. 4 ein pulsweitenmoduliertes Steuersignal mit abgeflachten Ein- und Ausschaltflanken zur Betätigung einer erfindungsgemäßen Vorrichtung.

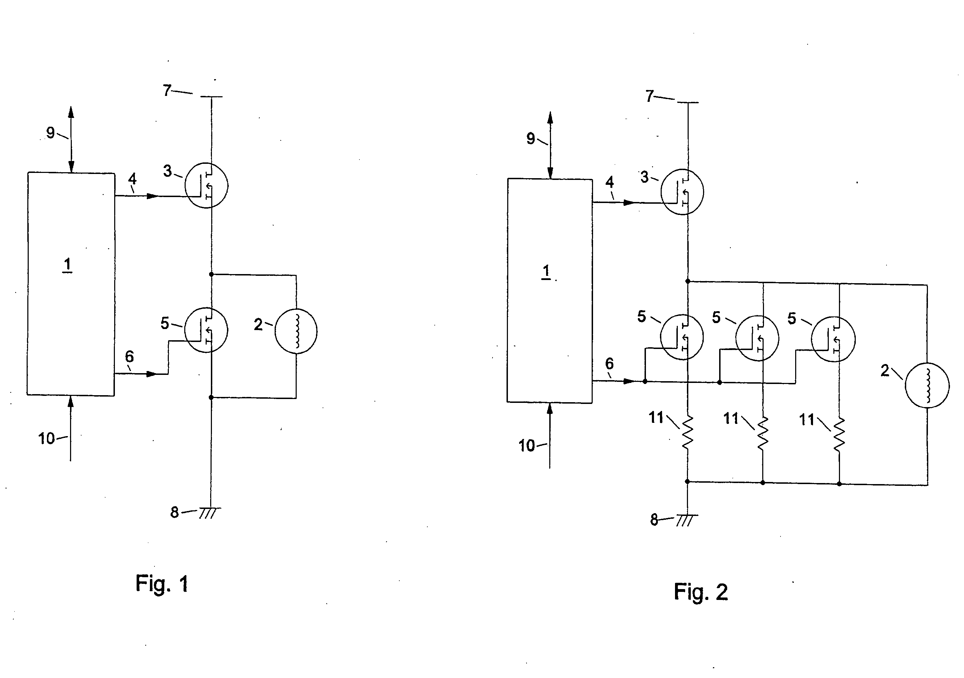

Fig. 1 zeigt eine Steuer- bzw. Regelelektronik mit einer Steuer- bzw. Regeleinrichtung 1, die über Leitungen 9, 10 mit nicht dargestellten weiteren Bauteilen in Verbindung steht und über Leitungen 4, 6 Schaltelemente 3, 5 leitend schalten kann. Das erste Schaltelement 3 ist in Serie mit der Erregerspule 2 einer nicht näher dargestellten Wirbelstrombremse geschalten. Durch das Leitendschalten des ersten Schaltelementes 3 über die Leitung 4 durch die Steuer- bzw. Regeleinrichtung 1 kann aufgrund der zwischen Batterie 7 und Masse 8 vorliegenden Spannung ein elektrischer Strom fließen. Das Betätigungssignal der Steuer- bzw. Regeleinrichtung 1 über die Leitung 4 kann dabei erfindungsgemäß pulsweitenmoduliert ausgebildet sein. Durch die Abflachung der Ein- und Ausschaltflanken 35, 37 der Schaltsignale 34 kann die Beeinflussung des Bordnetzes durch die induktiv erzeugten Spannungsschwankungen minimiert werden. Sollte der geschlossene Stromkreis über das erste Schaltelement 3 nicht mehr unterbrechbar sein, kann die Steuer- bzw. Regeleinrichtung 1 über die Leitung 6 das zweite Schaltelement 5 leitend schalten. Durch den geringeren Widerstand der zwei seriell geschalteten Schaltelemente 3, 5 im Vergleich zu dem viel größeren Widerstand des über die Erregerspule 2 und Schaltelement 3 führenden Stromweges, kommt es zu einem großen Kurzschluss-Strom über das zweite Schaltelement 5 und das erste Schaltelement 3 und damit zum Durchbrennen des bereits im Normalbetrieb thermisch belasteten ersten Schaltelements 3. Dadurch wird die leitende Verbindung zwischen der Batterie 7 und der Masse 8 unterbrochen, wodurch die Wirbelstrombremse in den Aus-Zustand übergeht. Als Batterie kann beispielsweise eine 12-Volt oder eine 24-Volt-Batterie vorgesehen sein. Der Innenwiderstand der Erregerspulen 2 beträgt beispielsweise zwischen 120 Milliohm und 170 Milliohm. Die im Normalbetrieb auftretende Stromstärke bewegt sich zwischen 70 Ampere und 200 Ampere. Der Innenwiderstand eines leitend geschaltenen Transistor bewegt sich beispielsweise im Bereich einiger weniger Milliohm. Daraus ist abschätzbar, dass der auftretende Kurzschluss-Strom in etwa 1-2 Größenordnungen größer als der Normalbetriebsstrom ist. Das Durchbrennen der Schaltelemente erfolgt üblicherweise bereits bei etwa dem zehnfachen Wert des Nennstroms.

Fig. 2 zeigt eine Variante der Ausführungsform gemäß Fig. 1 bei der mehrere zweite Schaltelemente 5 parallel mit der zu schaltenden Vorrichtung hier den Erregerspulen 2 einer Wirbelstrombremse und in Serie mit dem ersten Schaltelement 3 geschalten sind. Zusätzlich ist jedes zweite Schaltelement 5 in Serie mit einem Widerstand 11 geschalten, der den Stromfluss durch die einzelnen zweiten Schaltelemente 5 begrenzt. Bei einer derartigen Parallelschaltung ist der das erste Schaltelement 3 durchfließende Strom durch die Summe der einzelnen Teilströme in den Zweigen der Parallelschaltung gegeben. Da der Stromfluss durch die zweiten Schaltelemente 5 bei deren Leitendschaltung über die Leitung 6 durch die Steuer- bzw. Regeleinrichtung 1 sehr viel größer ist als der Stromfluss durch die Erregerspulen 2, kann abgeschätzt werden, dass in diesem Ausführungsbeispiel in etwa dreimal so viel Strom durch das erste Schaltelement 3 wie durch eines der zweiten Schaltelemente 5 fließt. Dadurch ist klar, dass die Wahrscheinlichkeit eines Durchbrennens des ersten Schaltelements 3 und damit der Unterbrechung des Stromkreises viel größer ist als die Wahrscheinlichkeit, dass auch nur eines der zweiten Schaltelemente 5 vorher durchbrennt, wobei dies für sich genommen noch nicht problematisch wäre, da ja zwei weitere zweite Schaltelemente 5 vorhanden wären.

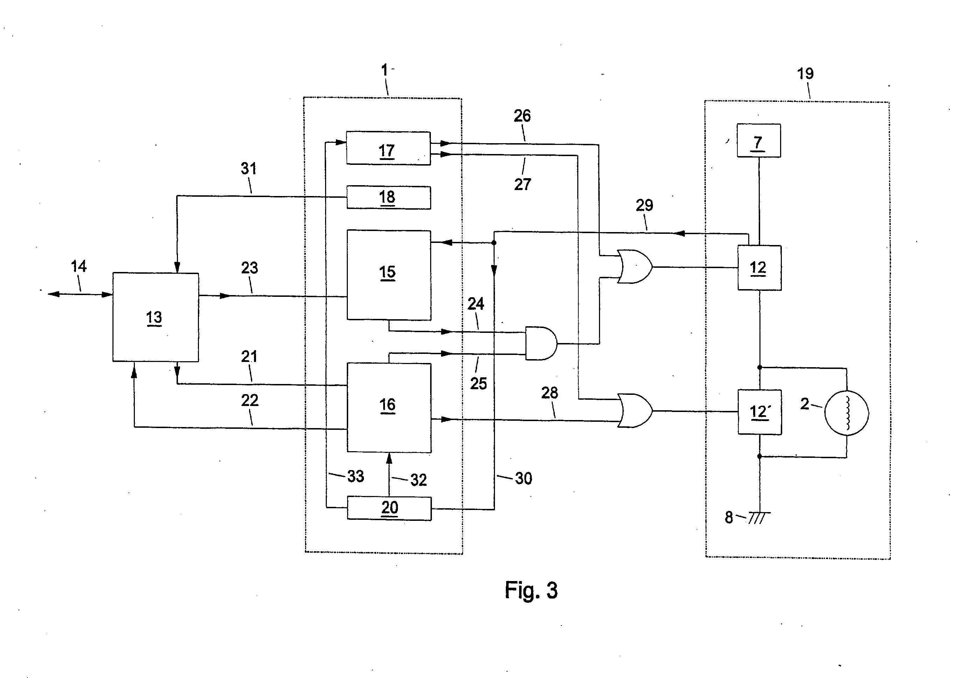

Fig. 3 zeigt schematisch den Aufbau des elektronischen Versorgungsmoduls EPM einer zweiteilig ausgeführten Steuer- bzw. Regelelektronik. Über einer bidirektionalen Schnittstelle 13 wird das EPM durch Leitungen 14 vom nicht dargestellten ECM mit Daten und/oder Energie versorgt und kann seinerseits Daten an das ECM übermitteln. Der elektrische Schaltkreis 19 weist eine Batterie 7 sowie eine Erdung 8 sowie dazwischen geschaltene Schaltmodule 12,12' und Erregerspulen 2 auf. Die Schaltmodule 12,12' weisen dabei einerseits Schaltelemente 3,5 zur Unterbrechung bzw. Schließung des elektrischen Stromkreises 19 auf und andererseits zusätzliche, dem Stand der Technik entsprechende, und daher nicht dargestellte Schaltungen zur Kontrolle des Betriebszustandes der einzelnen Schaltmodule 12,12'sowie zum Schutz der eigentlichen Schaltelemente 3,5. Die Steuer- bzw. Regeleinrichtung 1 umfasst in diesem Ausführungsbeispiel einen Überspannungsschutz 17, eine Übertemperaturwarnungseinrichtung 18, einen Leistungssteller 15, eine Fehlereinheit 16 sowie eine Funktionsüberwachungseinheit 20.

Der Leistungssteller 15 empfängt über Leitung 23, Schnittstelle 13 und Leitung 14 das vom hier nicht dargestellten ECM erzeugte und von der Schnittstelle 13 bearbeitete pulsweitenmodulierte Betätigungssignal 38. In diesem Ausführungsbeispiel wird die Flankenabflachung im Leistungssteller 15 selbst vorgenommen und das derart abgeänderte Betätigungssignal 34 über die Leitung 24 abgegeben. Wie später noch erläutert wird, überwacht die Fehlereinheit 16 den Betriebszustand des EPM und gibt bei Normalbetriebszustand über Leitung 25 ein Freigabesignal ab. Nur wenn dieses Freigabesignal auf Leitung 25 und gleichzeitig das Betätigungssignal des Leistungssteller 15 auf Leitung 24 vorliegen, kommt es zur Leitendschaltung des ersten Schaltmoduls 12. Während das Freigabesignal der Fehlereinheit 16 im Normalfall ständig anliegt, erfolgt das Betätigungssignal 34 des Leistungsstellers 15 wie oben ausgeführt pulsartig. Wird durch die Überspannungsschutzeinheit 17 auf nicht dargestellte Weise eine Überspannung detektiert, kann es ebenfalls zum Leitendschalten des ersten Schaltmoduls 12 über die Leitung 26 kommen, um eine Zerstörung der empfindlichen Schaltelemente des Schaltkreises 19 zu verhindern. Dieses Leitendschalten erfolgt nur solange als eine Überspannung vorliegt. Zusammenfassend wird das erste - in Serie mit der zu schaltenden Verrichtung geschaltene - Schaltmodul 12 also nur dann leitend geschalten, wenn gleichzeitig über Leitung 24 ein Betätigungssignal des Leistungsstellers 15 und über Leitung 25 ein Freigabesignal der Fehlereinheit 16 vorliegen oder bei Vorliegen eines Überspannungssignals der Überspannungsschutz Einheit 17 auf Leitung 26.

Das zweite Schaltmodul 12' das parallel zu den Erregerspulen 2 und in Serie mit dem ersten Schaltmodul 12'geschalten ist, und wie oben ausgeführt als schaltbare Kurzschluss-Sicherung fungiert, kann über die Fehlereinheit 16 und Leitung 28 oder über die Überspannungsschutzeinheit 17 auf Leitung 27 leitend geschalten werden. Das erste Schaltmodul 12 liefert über Leitung 29 Informationen über seinen Betriebszustand an den Leistungssteller 15 sowie über Leitung 30 an die Funktionsüberwachungseinheit 20. Die Funktionsüberwachungseinheit 20 gibt über Leitung 32 Signale an die Fehlereinheit 16 und über Leitung 33 an die Überspannungsschutzeinheit 17 weiter. Diese Signale dienen beispielsweise zur Überstrom- oder Kurzschlusserfassung, zur Unter- bzw. Überspannungsüberwachung zur Übertemperaturabschaltung, beispielsweise bei 105 Grad Celsius sowie zur Vornahme einer Einschaltverriegelung zur Verhinderung der Inbetriebnahme der Wirbelstrombremse. Die Fehlereinheit 16 gibt über Leitung 22 Schnittstelle 13 und Leitung 14 Informationen an das ECM weiter und empfängt über Leitung 14 Schnittstelle 13 und Leitung 21 Informationen vom ECM. Dadurch ist es beispielsweise möglich, den Fehlerspeicher der Fehlereinheit 16 auszulesen und gegebenenfalls wieder zu löschen.

Das Weiterleiten von Informationen über die Leitungen 14 erfolgt beispielsweise über eine galvanisch getrennte kurzschlussfeste Wechselspannung in einem Frequenzbereich von 60 bis 200 Kilohertz. Die verschiedenen Frequenzen haben dabei unterschiedliche Funktionen. Beispielsweise kann es bei einer Frequenz von 60 Kilohertz zur Aktivierung des EPM durch das ECM kommen, ohne jedoch die Ansteuerung der Wirbelstrombremse selbst zu aktivieren. Die Inbetriebnahme der Wirbelstrombremse kann bei einer Frequenz zwischen 100 und 140 Kilohertz vorgenommen werden, wobei die Pulsweitenmodulierung durch Umschalten der Frequenz zwischen 80 und 120 Kilohertz generiert werden kann. Das Zurücksetzen der durch die Fehlereinheit 16 im EPM detektierten Fehler kann beispielsweise bei einer Frequenz von 200 Kilohertz erfolgen. Durch die Belastung der Zweidrahtschnittstelle mit definierten Ohm schen Lasten kann das Zurückmelden von verschiedenen Fehlern an das ECM erfolgen. Die Regelung des EPM durch das ECM kann in Abhängigkeit diese Informationen vorgenommen werden.

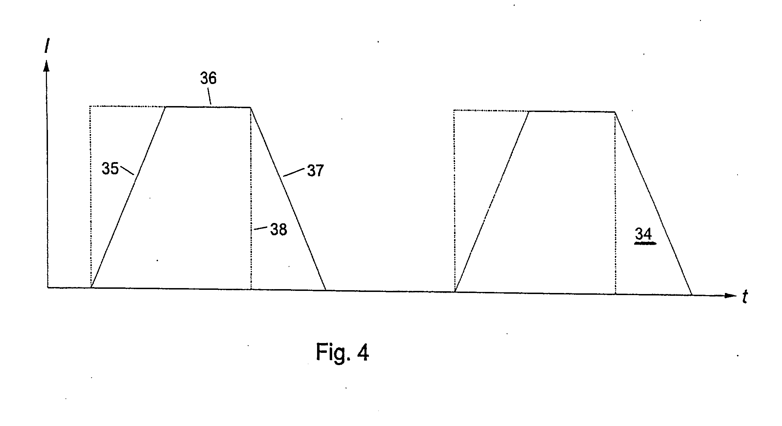

Fig. 4 zeigt das pulsweitenmodulierte Betätigungssignal 34 in Abhängigkeit von der Zeit t, wobei auf der Ordinate die Stromstärke I aufgetragen ist. Zu erkennen sind die abgeflachten Einschaltflanken 35 und Ausschaltflanken 37 sowie der Maximalwert 36. Strichliert eingezeichnet ist ein pulsweitenmoduliertes Betätigungssignal 38 ohne abgeflachte Flanken gemäß dem Stand der Technik.

In allen Figuren sowie in den Beschreibungen wurde auf die Darstellung bzw. Beschreibung von dem Fachmann geläufigen Bauteilen bzw. Handlungsweisen verzichtet.

## Patentansprüche

1. Steuer- bzw. Regelelektronik, insbesondere für eine Wirbelstrombremse eines Fahrzeugs, mit einer Steuer- bzw. Regeleinrichtung zur Steuerung bzw. Regelung der zu schaltenden Vorrichtung, vorzugsweise der Erregerspulen einer Wirbelstrombremse, und mit einem ersten durch die Steuer- bzw. Regeleinrichtung schaltbaren Schaltelement, das in Serie mit der zu schaltenden Vorrichtung, insbesondere mit den Erregerspulen einer Wirbelstrombremse geschalten ist, **dadurch gekennzeichnet, dass** zur Erhöhung der Betriebssicherheit mindestens ein weiteres durch die Steuer- bzw. Regeleinrichtung schaltbares Schaltelement (5) parallel zu der zu schaltenden Vorrichtung, vorzugsweise mit den Erregerspulen (2) einer Wirbelstrombremse, und in Serie mit dem ersten Schaltelement (3) geschalten ist, wobei das mindestens eine weitere Schaltelement (5) bei einem Defekt des ersten Schaltelements (3), welcher ein Unterbrechen des über das erste Schaltelement (3) geschlossenen Stromkreises durch das erste Schaltelement (3) verhindert, zur Erzielung eines Durchbrennens des ersten Schaltelements (3) und damit der Unterbrechung des Stromkreises durch die Steuer- bzw. Regeleinrichtung leitfähig schaltbar ist.

2. Steuer- bzw. Regelelektronik nach Anspruch 1, **dadurch gekennzeichnet, dass** alle Schaltelemente (3, 5) baugleich sind.

3. Steuer- bzw. Regelelektronik nach Anspruch 1 oder 2, **dadurch gekennzeichnet, dass** mit wenigstens einem, vorzugsweise jedem der parallel zu der zu schaltenden Vorrichtung, vorzugsweise mit den Erregerspulen (2) einer Wirbelstrombremse geschaffenen Schaltelemente (5) jeweils ein elektrischer Widerstand (11) in Serie geschalten ist, wobei jeder der elektrischen Widerstände (11) parallel zu der zu schaltenden Vorrichtung, vorzugsweise den Erregerspulen (2) einer Wirbelstrombremse, geschalten ist.

4. Steuer- bzw. Regelelektronik nach Anspruch 2, **dadurch gekennzeichnet, dass** alle Widerstände (11) gleichohmig sind.

5. Steuer- bzw. Regelelektronik nach einem der Ansprüche 1 bis 4, **dadurch gekennzeichnet, dass** wenigstens ein Schaltelement ein Halbleiterbauelement als Schalter, vorzugsweise einen MOSFET umfasst.

6. Steuer- bzw. Regelelektronik nach einem der Ansprüche 1 bis 5, **dadurch gekennzeichnet, dass** der Steuer- bzw. Regeleinrichtung (1) ein für den Betriebszustand wenigstens eines Schaltelementes (3, 5, 12) charakteristisches Signal zuführbar ist.

7. Steuer- bzw. Regelelektronik nach Anspruch 6, **dadurch gekennzeichnet, dass** das Signal Informationen über den Spannungsabfall am jeweiligen Schaltelement (3, 5, 12) beinhaltet.

8. Steuer- bzw. Regelelektronik nach einem der Ansprüche 1 bis 7, **dadurch gekennzeichnet, dass** sie einen Temperatursensor zur Überwachung der Betriebstemperatur der Steuer- bzw. Regelelektronik selbst und/oder der zu schaltenden Vorrichtung, vorzugsweise der Wirbelstrombremse, aufweist, dessen Signal wenigstens der Steuer- bzw. Regeleinrichtung (1) zuführbar ist.

9. Steuer- bzw. Regelelektronik nach einem der Ansprüche 1 bis 8, **dadurch gekennzeichnet, dass** sie einen Spannungssensor zur Überwachung der elektrischen Betriebsspannung der zu schaltenden Vorrichtung, vorzugsweise der Erregerspulen (2) einer Wirbelstrombremse, und/oder der Steuer- bzw. Regelelektronik selbst aufweist, dessen Signal wenigstens der Steuer- bzw. Regeleinrichtung (1) zuführbar ist.

10. Steuer- bzw. Regelelektronik nach einem der Ansprüche 1 bis 9, **dadurch gekennzeichnet, dass** die zu schaltende Vorrichtung Erregerspulen (2) einer Wirbelstrombremse aufweist, die zur Regelung der Bremsleistung vorzugsweise als Gesamtheit mit einer pulsweitenmodulierten (PWM) Gleichspannung durch das in Serie mit den Erregerspulen (2) geschaltete Schaltelement (3) schaltbar sind.

11. Steuer- bzw. Regelelektronik nach Anspruch 10, **dadurch gekennzeichnet, dass** die Ein- (35) und/oder Ausschaltflanken (37) der dem in Serie mit den Erregerspulen (2) geschalteten Schaltelement (3) von der Steuer- bzw. Regeleinrichtung (1) zugeführten Schaltsignale (34) zur Minimierung unerwünschter Spannungsschwankungen über eine bestimmte Zeitspanne, vorzugsweise etwa 100 µs, ansteigend bzw. abfallend ausgebildet sind.

12. Steuer- bzw. Regelelektronik nach einem der Ansprüche 1 bis 11, **dadurch gekennzeichnet, dass** sie in einem Fahrzeug angeordnet ist und eine Schnittstelle (13) zur bidirektionalen Datenübertragung mit anderen im Fahrzeug angeordneten Einrichtungen - vorzugsweise ABS, Tachometer, Bordcomputer oder dergleichen - aufweist.

13. Steuer- bzw. Regelelektronik nach einem der Ansprüche 1 bis 12, **dadurch gekennzeichnet, dass** sie in einem Fahrzeug angeordnet ist und aus zwei räumlich voneinander getrennten Modulen besteht, die über eine bidirektionale Schnittstelle (13) zur Energie- und/oder Datenübertragung, vorzugsweise Zwei-Drahtschnittstelle, miteinander in Verbindung stehen, wobei vorzugsweise das eine der beiden Module in unmittelbarer Nähe zur Wirbelstrombremse des Fahrzeugs angeordnet ist und vorzugsweise das andere der beiden Module im Führerhaus des Fahrzeugs angeordnet ist.

14. Fahrzeug mit einer Wirbelstrombremse, **gekennzeichnet durch** eine Steuer- bzw. Regelelektronik nach einem der Ansprüche 1 bis 13.

15. Verfahren zur Steuerung einer Vorrichtung, insbesondere der Wirbelstrombremse eines Fahrzeugs, mit einer Steuer- bzw. Regelelektronik nach einem der Ansprüche 1 bis 14, **dadurch gekennzeichnet, dass** bei Vorliegen einer Funktionsstörung des in Serie mit der zu schaltenden Vorrichtung, vorzugsweise den Erregerspulen (2) einer Wirbelstrombremse, geschaltenen Schaltelements (3) die Abschaltung der Vorrichtung durch das Leitendschalten des (der) zu der zu schaltenden Vorrichtung parallel geschaltenen und mit dem ersten Schaltelement (3) in Serie geschalteten Schaltelemente(s) (5) erfolgt.

16. Verfahren nach Anspruch 15, **dadurch gekennzeichnet, dass** die Funktion aller Schaltelemente (3, 5, 12) durch die Steuer- bzw. Regelelektronik, vorzugsweise durch die Steuer- bzw. Regeleinrichtung (1) ständig überwacht wird und bei Auftreten einer Funktionsstörung eines Schaltelementes (3, 5, 12) die Abschaltung der Vorrichtung erfolgt.

17. Verfahren nach Anspruch 15 oder 16, **dadurch gekennzeichnet, dass** die Steuer- bzw. Regelelektronik bei Auftreten einer Funktionsstörung einer ihrer Komponenten und/oder der zu schaltenden Vorrichtung in einen Fehlerbetriebsmodus übergeht, in dem das Vorhandensein der Funktionsstörung laufend geprüft wird und die Steuer- bzw. Regelelektronik nach dem Verschwinden der Funktionsstörung wieder in den Normalbetriebsmodus übergeht.

18. Verfahren nach einem der Ansprüche 15 bis 17, **dadurch gekennzeichnet, dass** bei Zerstörung eines der Schaltelemente die Abschaltung der zu schaltenden Vorrichtung erfolgt und die neuerliche Inbetriebnahme durch die Steuer- bzw. Regelelektronik verhindert wird.

## Claims

1. An electronic control or regulating system, in particular for an eddy current brake of a vehicle, comprising a control or regulating device for controlling or regulating the apparatus to be switched, preferably the exciter coils of an eddy current brake, and a first switching element which is switchable by the control or regulating device and which is connected in series with the apparatus to be switched, in particular the exciter coils of an eddy current brake, **characterised in that** to increase the operational reliability at least one further switching element (5) switchable by the control or regulating device is connected parallel to the apparatus to be connected, preferably to the exciter coils (2) of an eddy current brake and in series with the first switching element (3), wherein the at least one further switching element (5) upon a defect in the first switching element (3) which prevents an interruption in the circuit closed by way of the first switching element (3) by the first switching element (3) is switchable into a conductive state to achieve fusing of the first switching element (3) and thus an interruption in the circuit by the control or regulating device.

2. An electronic control or regulating system according to claim 1 **characterised in that** all switching elements (3, 5) are of the same structure.

3. An electronic control or regulating system according to claim 1 or claim 2 **characterised in that** a respective electrical resistor (11) is connected in series with at least one and preferably each of the switching elements (5) connected in parallel with the apparatus to be switched, preferably the exciter coils (2) of an eddy current brake, wherein each of the electrical resistors (11) is connected in parallel with the apparatus to be switched, preferably the exciter coils (2) of an eddy current brake.

4. An electronic control or regulating system according to claim 2 **characterised in that** all resistors (11) are of the same ohmic value.

5. An electronic control or regulating system according to one of claims 1 to 4 **characterised in that** at least one switching element includes a semiconductor element as a switch, preferably an MOSFET.

6. An electronic control or regulating system according to one of claims 1 to 5 **characterised in that** a signal characteristic of the operating state of at least one switching element (3, 5, 12) can be fed to the control or regulating device (1).

7. An electronic control or regulating system according to claim 6 **characterised in that** the signal contains information about the voltage drop at the respective switching element (3, 5, 12).

8. An electronic control or regulating system according to one of claims 1 to 7 **characterised in that** it has a temperature sensor for monitoring the operating temperature of the electronic control or regulating system itself and/or the apparatus to be switched, preferably the eddy current brake, the signal of which can be fed at least to the control or regulating device (1).

9. An electronic control or regulating system according to one of claims 1 to 8 **characterised in that** it has a voltage sensor for monitoring the electrical operating voltage of the apparatus to be switched, preferably the exciter coils (2) of an eddy current brake, and/or the electronic control or regulating system itself, the signal of which can be fed at least to the control or regulating device (1).

10. An electronic control or regulating system according to one of claims 1 to 9 **characterised in that** the apparatus to be switched has exciter coils (2) of an eddy current brake, which for regulating the braking power preferably as an entirety are switchable with a pulse width-modulated (PWM) dc voltage by the switching element (3) connected in series with the exciter coils (2).

11. An electronic control or regulating system according to claim 10 **characterised in that** the switching-on flanks (35) and/or switching-off flanks (37) of the switching signals (34) fed to the switching element (3) connected in series by the exciter coils (2) by the control or regulating device (1) are adapted to rise or fall to minimise unwanted voltage fluctuations over a given period of time, preferably about 100 µs.

12. An electronic control or regulating system according to one of claims 1 to 11 **characterised in that** it is arranged in a vehicle and has an interface (13) for bidirectional data transfer with other devices arranged in the vehicle - preferably ABS, tachometer, on-board computer or the like.

13. An electronic control or regulating system according to one of claims 1 to 12 **characterised in that** it is arranged in a vehicle and comprises two modules which are spatially separated from each other and which communicate with each other by way of a bidirectional interface (13) for energy and/or data transfer, preferably a two-wire interface, wherein preferably one of the two modules is arranged in the immediate proximity of the eddy current brake of the vehicle and preferably the other of the two modules is arranged in the driving compartment of the vehicle.

14. A vehicle having an eddy current brake **characterised by** an electronic control or regulating system according to one of claims 1 to 13.

15. A method of controlling an apparatus, in particular the eddy current brake of a vehicle, with an electronic control or regulating system according to one of claims 1 to 14 **characterised in that** when there is a functional disturbance in the switching element (3) connected in series with the apparatus to be switched, preferably the exciter coils (2) of an eddy current brake, the apparatus is switched off by switching into the conducting state of the switching element or elements (5) connected in parallel with the apparatus to be switched and in series with the first switching element (3).

16. A method according to claim 15 **characterised in that** the function of all switching elements (3, 5, 12) is continuously monitored by the electronic control or regulating system, preferably by the control or regulating device (1), and the apparatus is switched off upon the occurrence of a functional disturbance in a switching element (3, 5, 12).

17. A method according to claim 15 or claim 16 **characterised in that** upon the occurrence of a functional disturbance in one of its components and/or the apparatus to be switched the electronic control or regulating system goes into a malfunction mode in which the presence of the functional disturbance is continuously checked and the electronic control or regulating system goes back into the normal operating mode again after the functional disturbance disappears.

18. A method according to one of claims 15 to 17 **characterised in that** upon destruction of one of the switching elements the apparatus to be switched is switched off and renewed operational start up is prevented by the electronic control or regulating system.

## Revendications

1. Dispositif électronique de commande ou de réglage, en particulier pour un frein à courants de Foucault d'un véhicule, équipé d'une unité de commande ou de réglage destinée à commander ou régler le dispositif à commander, de préférence des bobines d'excitation d'un frein à courants de Foucault, et d'un premier élément de commutation pouvant être commandé par l'unité de commande ou de réglage qui est monté en série avec le dispositif à commander, en particulier avec les bobines d'excitation d'un frein à courants de Foucault, **caractérisé en ce que**, pour augmenter la sécurité de fonctionnement, au moins un autre élément de commutation (5) pouvant être commandé par l'unité de commande ou de réglage est monté en parallèle au dispositif à commander, de préférence en parallèle avec les bobines d'excitation (2) d'un frein à courants de Foucault, et en série avec le premier élément de commutation (3), dans lequel en cas de défaillance du premier élément de commutation (3) empêchant une rupture du circuit électrique fermé par le premier élément de commutation (3) par le biais du premier élément de commutation (3), le au moins un autre élément de commutation (5) peut être commandé pour être conducteur afin d'obtenir un claquage du premier élément de commutation (3) et ainsi l'interruption du circuit électrique par l'unité de commande ou de réglage.

2. Dispositif électronique de commande ou de réglage selon la revendication 1, **caractérisé en ce que** tous les éléments de commutation (3, 5) sont identiques.

3. Dispositif électronique de commande ou de réglage selon la revendication 1 ou 2, **caractérisé en ce qu'**une résistance électrique (11) est montée en série avec au moins un élément de commutation (5), de préférence avec chacun des éléments de commutation (5) montés en parallèle au dispositif à commander, de préférence aux bobines d'excitation (2) d'un frein à courants de Foucault, dans lequel chacune des résistances électriques (11) est montée en parallèle au dispositif à commander, de préférence aux bobines d'excitation (2) d'un frein à courants de Foucault.

4. Dispositif électronique de commande ou de réglage selon la revendication 2, **caractérisé en ce que** toutes les résistances (11) ont la même valeur ohmique.

5. Dispositif électronique de commande ou de réglage selon l'une des revendications 1 à 4, **caractérisé en ce qu'**au moins un élément de commutation comporte un élément semi-conducteur servant de commutateur, de préférence un transistor MOSFET.

6. Dispositif électronique de commande ou de réglage selon l'une des revendications 1 à 5, **caractérisé en ce qu'**un signal caractéristique pour l'état de fonctionnement d'au moins un élément de commutation (3, 5, 12) peut être amené à l'unité de commande ou de réglage (1).

7. Dispositif électronique de commande ou de réglage selon la revendication 6, **caractérisé en ce que** le signal contient des informations sur la chute de tension aux bornes de l'élément de commutation respectif (3, 5, 12).

8. Dispositif électronique de commande ou de réglage selon l'une des revendications 1 à 7, **caractérisé en ce qu'**il comporte un capteur de température pour surveiller la température de fonctionnement du dispositif électronique de commande ou de réglage même et/ou du dispositif à commander, de préférence du frein à courants de Foucault, et dont le signal peut être amené au moins à l'unité de commande ou de réglage (1).

9. Dispositif électronique de commande ou de réglage selon l'une des revendications 1 à 8, **caractérisé en ce qu'**il comporte un capteur de tension pour surveiller la tension électrique de fonctionnement du dispositif à commander, de préférence des bobines d'excitation (2) d'un frein à courants de Foucault, et/ou du dispositif électronique de commande ou de réglage même, et dont le signal peut être amené au moins à l'unité de commande ou de réglage (1).

10. Dispositif électronique de commande ou de réglage selon l'une des revendications 1 à 9, **caractérisé en ce que** le dispositif à commander comporte des bobines d'excitation (2) d'un frein à courants de Foucault qui peuvent être commandées pour régler la puissance de freinage de préférence en tant qu'ensemble avec une tension continue soumise à une modulation d'impulsions en durée par le biais de l'élément de commutation (3) monté en série avec les bobines d'excitation (2).

11. Dispositif électronique de commande ou de réglage selon la revendication 10, **caractérisé en ce que** les fronts de commande montants (35) et/ou descendants (37) des signaux de commande (34) amenés par l'unité de commande ou de réglage (1) à l'élément de commutation (3) monté en série avec les bobines d'excitation (2) afin de minimiser des fluctuations de tension non souhaitées sont formés pour monter respectivement, descendre durant un intervalle de temps déterminé, de préférence de 100 µs environ.

12. Dispositif électronique de commande ou de réglage selon l'une des revendications 1 à 11, **caractérisé en ce qu'**il est disposé dans un véhicule et qu'il comporte une interface (13) pour la transmission de données bidirectionnelle avec d'autres dispositifs disposés dans le véhicule - de préférence système de freinage antiblocage, compteur de vitesse, ordinateur de bord ou des dispositifs similaires.

13. Dispositif électronique de commande ou de réglage selon l'une des revendications 1 à 12, **caractérisé en ce qu'**il est disposé dans un véhicule et se compose de deux modules disposés en des endroits différents qui sont reliées entre eux par le biais d'une interface bidirectionnelle (13) à des fins de transmission d'énergie et/ou de données, de préférence une interface à deux fils, dans lequel de préférence l'un des deux modules est disposé à proximité immédiate du frein à courants de Foucault du véhicule et de préférence l'autre des deux modules est disposé dans la cabine du conducteur du véhicule.

14. Véhicule équipé d'un frein à courants de Foucault, **caractérisé par** un dispositif électronique de commande ou de réglage selon l'une des revendications 1 à 13.

15. Procédé de commande d'un dispositif, en particulier du frein à courants de Foucault d'un véhicule, équipé d'un dispositif électronique de commande ou de réglage selon l'une des revendications 1 à 14, **caractérisé en ce que**, en présence d'un dysfonctionnement de l'élément de commutation (3) monté en série avec le dispositif à commander, de préférence avec des bobines d'excitation (2) d'un frein à courants de Foucault, l'arrêt du dispositif a lieu par la commande rendant conducteurs le ou les éléments de commutation (5) montés en parallèle avec le dispositif à commander et en série avec le premier élément de commutation (3).

16. Procédé selon la revendication 15, **caractérisé en ce que** le fonctionnement de tous les éléments de commutation (3, 5, 12) est surveillé en permanence par le dispositif électronique de commande ou de réglage, de préférence par l'unité de commande et de réglage (1) et **en ce que** l'arrêt du dispositif a lieu en cas d'apparition d'un dysfonctionnement d'un élément de commutation (3, 5, 12).

17. Procédé selon la revendication 15 ou 16, **caractérisé en ce que**, en cas d'apparition d'un dysfonctionnement d'un de ses composants et/ou du dispositif à commander, le dispositif électronique de commande ou de réglage passe dans un mode de fonctionnement d'erreur dans lequel la présence du dysfonctionnement est vérifiée en permanence et le dispositif électronique de commande ou de réglage repasse dans le mode de fonctionnement normal après la disparition du dysfonctionnement.

18. Procédé selon l'une des revendications 15 à 17, **caractérisé en ce que** l'arrêt du dispositif à commander a lieu en cas de destruction d'un des éléments de commutation et que la remise en service est empêchée par le dispositif électronique de commande ou de réglage.
